# EUROPÄISCHE PATENTSCHRIFT

(11) **EP 3 175 036 B1**
(45) Veröffentlichungstag und Bekanntmachung des Hinweises auf die Patenterteilung: **29.12.2021**
(21) Anmeldenummer: 15739574.0
(22) Anmeldetag: 17.07.2015
(51) Int. Cl.: D21G 1/02, D21F 3/08, D21F 3/10

(54) **VERFAHREN ZUR HERSTELUNG ODER BEARBEITUNG EINER WALZE, WALZE UND FUNKTIONSSCHICHT EINER WALZE**
METHOD FOR PRODUCING OR MACHINING A ROLLER, ROLLER AND FUNCTIONAL LAYER OF A ROLLER
PROCÉDÉ DE FABRICATION OU DE TRAITEMENT D'UN ROULEAU, ROULEAU ET COUCHE FONCTIONNELLE D'UN ROULEAU

(30) Priorität: 28.07.2014 DE 102014214734
(43) Veröffentlichungstag der Anmeldung: 07.06.2017
(73) Patentinhaber: Voith Patent GmbH, 89522 Heidenheim (DE)
(72) Erfinder: BROOKS, Wesley, Meyseyside (GB); EBERHARDT, Robert, 73479 Ellwangen (DE); GRASER, Siegfried, 89168 Niederstotzingen (DE); GROHMANN, Franz, 2671 Schmidsdorf (AT); LIU, Ting, 89522 Heidenheim (DE); MOSER, Ralf, 89567 Sontheim (DE); PROBST-SCHENDZIELORZ, Stefan, 89129 Langenau (DE); SCHMITT, Matthias, 81476 München (DE); WOKUREK, Michael, 110 Wien (AT)
(74) Vertreter: Voith Patent GmbH - Patentabteilung
(86) Internationale Anmeldenummer: PCT/EP2015/066408
(87) Internationale Veröffentlichungsnummer: WO 2016/016020

(56) Entgegenhaltungen:
- DE-A1-102010 001 940
- DE-A1-102011 082 849
- GB-A- 1 565 801
- US-A- 5 817 374
- US-A1- 2004 127 122
- None

## Beschreibung

Die Erfindung betrifft ein Verfahren zur Herstellung oder Bearbeitung einer Walze geeignet zum Einsatz in einer Maschine zur Herstellung oder Verarbeitung einer Faserstoffbahn.

In vielen industriellen Anlagen, wie beispielsweise Maschinen zur Papierherstellung oder Verarbeitung, wird eine große Anzahl von Walzen für verschiedenste Zwecke eingesetzt. Diese Walzen besitzen üblicherweise einen Walzenkern auf den eine oder mehrere Funktionsschichten aufgebracht sind. Diese Funktionsschichten treten beispielsweise in einer Papiermaschine mit der Papierbahn in Kontakt und müssen daher je nach Einsatzgebiet bestimmte Anforderungen an ihre physikalischen Eigenschaften oder ihre Oberflächeneigenschaften erfüllen. In vielen Fällen verschleißen diese Funktionsschichten auch deutlich schneller, als der Walzenkörper, und müssen daher während der Lebensdauer der Walze regelmäßig erneuert oder ersetzt werden.

Aus dem Stand der Technik wie z.B.: US 7,008,513 B2 sind hierfür verschiedene Verfahren bekannt, bei denen das Beschichtungsmaterial gleichmäßig auf die Oberfläche des zu beschichtenden Walzenrohlings aufgebracht wird.

US 2004/0127122 A1 beschreibt ein Herstellungsverfahren zum Aufbringen einer Funktionsschicht eines Walzenbezugs in drei Schritten. Zunächst wird ein Opfermaterial nach Art eines verlorenen Gusses auf den Walzenkern aufgebracht. Anschließend wird das Opfermaterial mit der eigentlichen Funktionsschicht, einem UV aushärtendem Polymer überzogen. Nach Aushärtung des Polymers wird in einem dritten Schritt das Opfermaterial herausgelöst.

DE 10 2011 082 849 A1 geht von einem Walzenbezug aus, bei dem auf die Funktionsschicht eine hydrophobe Beschichtung aufgebracht wird. Letztere kann nur in Rillen der Funktionsschicht eingebracht oder aber über die gesamte Funktionsschicht erstrecken. Dazu kann die gesamte Walze in eine entsprechende Flüssigkeit getaucht und hiernach vollständig thermisch durch Strahlung ausgehärtet werden.

GB 1 565 801 und DE 10 2010 001 940 A1 betreffen ein Herstellverfahren für einen Walzenbezug, dessen Funktionsschicht Lage um Lage jeweils durch Eintauchen des Walzenkerns in ein aushärtbares Polymer erfolgt. Dabei wird stets die gesamte Lage ausgehärtet bevor zur Bildung einer weiteren Lage der Walzenkern wieder in das aushärtbare Polymer eingetaucht wird. Eine selektive Bestrahlung des Polymers mittels Laser wird von keinem der Dokumente vorweggenommen.

In vielen Anwendungen ist es aber technisch notwendig, dass die Funktionsschicht keine einheitliche Glatte Fläche darstellt, sondern eine Struktur aus Kanälen, Rillen oder Bohrungen enthalten muss. Um dies zu erreichen wird nach heutigem Stand der Technik die Walze nach der Beschichtung einem zweiten Prozessschritt unterzogen. Dabei wird durch Techniken wir Fräsen oder Bohren die Funktionsschicht mit der benötigten Struktur versehen.

Dieser Stand der Technik ist jedoch in zweierlei Hinsicht problematisch. Zum einen werden zum Aufbringen der Funktionsschicht auf die Walze zwei Prozessschritte benötigt. Dies führt zu einer Verlängerung der Bearbeitungszeit und ist zudem mit höheren Kosten verbunden.

Weiterhin ist man bei der Art der Strukturen, die in die Funktionsschicht eingebracht werden, stark eingeschränkt, da nur Strukturen eingesetzt werden können, die durch einen Bohrer oder ein anderes Werkzeug von außen aus der Funktionsschicht entfernt werden. Aus technischer Sicht wäre es jedoch sehr wünschenswert, auch verdeckte Strukturen zu verwendenden, wie zum Beispiel Kanäle, die über weite Bereiche im Inneren der Funktionsschicht verlaufen.

Die Aufgabe der vorliegenden Erfindung besteht also darin, ein Verfahren anzugeben, bei dem die Funktionsschicht mit nahezu beliebigen Strukturen in einem einzigen Produktionsschritt hergestellt werden kann, sowie eine entsprechende Funktionsschicht einer Walze und eine entsprechende Walze.

Die Aufgabe wird vollständig gelöst durch ein Verfahren gemäß Anspruch 1
Im Sinne der vorliegenden Erfindung wird unter Struktur eine verfestigte und insbesondere vorgegebene Struktur verstanden. Mit vorgegeben ist gemeint, dass diese Struktur weitestgehend nicht zufällig infolge des Herstellungsprozess an sich entsteht, z.B. weil sich Infolge des abschließenden Aushärtens der Funktionsschicht eine zufällige Oberflächenstruktur der fertigen Funktionsschicht ergibt. Mit Strukturen im Sinne der Erfindung sind vorzugsweise dreidimensionale funktionelle Strukturen gemeint, die in die Funktionsschicht eingebracht sind bzw. von dieser ausgebildet werden. Diese können beispielsweise Rillen oder Löcher sein, wie sie nach dem Stand der Technik erst in einem Nachbearbeitungsschritt durch Bohren oder Fräsen etc. erzeugt werden können. Aber auch Kanäle sind denkbar. Diese Strukturen besitzen dann eine Funktion: Sie bzw. deren Begrenzungswände können z.B. zum (Ab-)Leiten eines Mediums dienen.

Anders ausgedrückt werden diese vorgegebenen Strukturen urformend - also additiv - zugleich mit der Funktionsschicht, insbesondere lagenweise, aufgebaut. In anderen Worten begrenzt die fertige Funktionsschicht zugleich diese Strukturen oder bildet sie aus - teilweise oder vollständig - ohne dass es eines zusätzlichen Nachbearbeitungsschrittes bedarf, etwa einer subtrahierenden Bearbeitung z.B. durch spanende Bearbeitung wie Bohren oder Fräsen. Man könnte auch sagen, dass die vorgegebene Struktur zugleich mit dem letzten Schritt des Aushärtens des Beschichtungssubstrats bzw. der gesamten Funktionsschicht vollständig von letztgenannter endgültig ausgebildet wird.

Mit einer fertiggestellten Funktionsschicht ist eine für den Einsatzzweck genannte, fertige Funktionsschicht gemeint, die die genannten Strukturen bereits enthält und zur Herstellung dieser Strukturen im Wesentlichen keines weiteren Nachbearbeitungsschritts bedarf.

Das erfindungsgemäße Verfahren ist in Anspruch 1 definiert. Es betrifft ein Verfahren zur Herstellung oder Bearbeitung einer Walze, die für den zum Einsatz in einer Maschine zur Herstellung oder Verarbeitung einer Faserstoffbahn geeignet ist. Unter einer erfindungsgemäßen Bearbeitung einer Walze kann beispielsweise das Erneuern einer oder mehrerer Funktionsschichten bei einer bestehenden Walze verstanden werden. Die Walze umfasst einen Walzenkern und zumindest eine Funktionsschicht. Die Walze kann aber auch mehrere Funktionsschichten mit gleichen oder unterschiedlichen Aufgaben umfassen. Zudem kann vorgesehen sein, dass -in Radialrichtung nach aussen betrachtet - zwischen dem Walzenkern und einer innersten Funktionsschicht und/oder zwischen zwei Funktionsschichten eine Verbindungsschicht vorgesehen ist. Dabei kann es sich beispielsweise um eine klebende Schicht handeln.
Das Verfahren umfasst das Aufbringen zumindest einer Funktionsschicht auf einen Walzenrohling.
Mit dem Begriff Walzenrohling wird dabei jedes Zwischenstadium bei der Herstellung der Walze bezeichnet, auf das noch zumindest eine weitere Funktionsschicht aufgetragen wird.

Das Aufbringen der Funktionsschicht weist in dem erfindungsgemäßen Verfahren zumindest die folgenden Prozessschritte auf:
a) Aufbringen eines Beschichtungssubstrats auf die Oberfläche des Walzenrohlings, wobei das Aufbringen über mindestens die halbe Walzenbreite, bevorzugt über 75% der Walzenbreite, besonders bevorzugt über die gesamte Walzenbreite gleichzeitig erfolgt
b) Aushärten des gesamten aufgebrachten Beschichtungssubstrats oder Teilen davon unter Bildung einer verfestigten Struktur.
Hierbei sind zwei Aspekte besonders hervorzuheben. Zum einen den breiten Auftrag des Beschichtungsmediums. Bei den Verfahren nach dem Stand der Technik wird ein Beschichtungsmedium mit einer Düse oder ähnlichem aufgebracht, deren Breite ein Bruchteil der Walze beträgt. Die Oberfläche der Walze wird dann durch eine Bewegung dieser Düse und sukzessives Applizieren des Beschichtungsmediums abgedeckt. In dem erfindungsgemäßen Verfahren wird das Beschichtungsmedium über die gesamte Walzenbreite oder zumindest die halbe Walzenbreite gleichzeitig aufgetragen.
Zum anderen ist in Schritt b) die Möglichkeit vorgesehen, das gesamte Beschichtungssubstrat oder auch nur Teile davon zu einer verfestigten Struktur auszuhärten. Dies erlaubt eine hohe Flexibilität im Fertigungsprozess.

Vorteilhafte Ausführungen werden in den Unteransprüchen beschrieben.

Als Beschichtungssubstrat wird ein Material bezeichnet, das den alleinigen oder wesentlichen Bestandteil der Funktionsschicht bildet, nachdem es durch einen Prozessschritt des Aushärtens eine Änderung seiner Struktur erfahren hat. In einer vorteilhaften Ausführung des Verfahrens umfasst das Beschichtungssubstrat ein Pulver oder eine Flüssigkeit. Bei einem Pulver als Beschichtungssubstrat wird unter Aushärten im Rahmen dieser Anmeldung das Umwandeln in eine feste, weitgehend homogene Schicht verstanden. Als Beispiel für solche Verfahren der Aushärtung sie an dieser Stelle das Sintern, speziell das Lasersintern erwähnt.

Als Beschichtungssubstrat kommt eine Vielzahl von Materialien in Frage. Besonders vorteilhaft ist es, wenn das Beschichtungssubstrat Kunststoff und/oder Metall umfasst. Als Kunststoff kann in einer vorteilhaften Ausführung des Verfahrens beispielsweise ein Polyurethan (PU), Polyamid (PA), Polyetheretherketon (PEEK), Gummiartige Elastomere verwendete werden. Auch spezielle kombinierte Materialien wie aluminiumgefülltes PA, Carbon gefülltes PA oder glasfasergefülltes PA können zum Einsatz kommen. Als flüssiges Beschichtungssubstrat ist zudem beispielsweise auch ein Epoxidharz gut geeignet.

Das Aufbringen des Beschichtungssubstrats kann in einer besonders vorteilhaften Ausführung durch Eintauchen des Walzenrohlings in ein Vorratsvolumen wie beispielsweise eine Wanne oder ein Becken erfolgen, welches mit Beschichtungssubstrat angefüllt wird. Der Walzenrohling ist dabei vorzugsweise um die Walzenachse drehbar gelagert. Durch Drehen des Walzenrohlings kann erreicht werden, dass die gesamte Oberfläche des Walzenrohlings nach und nach mit dem Beschichtungssubstrat in Kontakt kommt.

In einer bevorzugten Ausführung des Verfahrens haftet das Beschichtungssubstrat durch elektrostatische Anziehung am Walzenrohling an.

In einer weiteren vorteilhaften Ausführung kann vorgesehen sein, dass das Beschichtungssubstrat in einer oder mehreren Lagen übereinander aufgetragen wird, wobei der Auftrag einer folgenden Lage von Beschichtungssubstrat auf der ganz oder teilweise verfestigten Struktur der vorherigen Lage erfolgt. Eine Funktionsschicht kann damit aus mehreren Lagen von Beschichtungssubtrat aufgebaut werden. Durch den Lagenweisen Aufbau der Funktionsschicht ist es somit auch möglich, die Eigenschaft der Funktionsschicht über ihre Dicke hin zu ändern, indem man entweder das Beschichtungssubstrat in verschiedenen Lagen unterschiedlich aushärtet, oder in allen oder einigen Lagen unterschiedliche Beschichtungssubstrate verwendet.

Die Dicke der aufgebrachten Lage von Beschichtungssubstrat kann in einer vorteilhaften Ausführung mittels eines Schabers eingestellt werden kann, welcher in Drehrichtung der Walze gesehen nach dem Aufbringen der Walze aber vor dem Aushärten des Beschichtungssubstrats angeordnet ist. Überschüssiges Beschichtungssubstrat, das an der Walze haftet, wird durch diesen Schaber entfernt, und es wird nur eine Schicht von definierter Dicke ausgehärtet.

In einer weiteren erfindungsgemäßen Variante des Verfahrens können beim lagenweisen Aufbau der Funktionsschicht Bereiche von nicht ausgehärtetem Beschichtungssubstrat ganz oder teilweise von Bereichen ausgehärteten Beschichtungssubstrats der darauffolgenden Lage überdeckt werden.

In einer ganz besonders bevorzugten Ausführung weist das erfindungsgemäße Verfahren einen weiteren Prozessschritt auf, in dem Beschichtungssubstrat, welches in Prozessschritt b) nicht ausgehärtet wurde, wieder entfernt wird. Auf diese Weise lassen sich beispielsweise schon während des Aufbringens der Funktionsschicht vorzugsweise dreidimensionale funktionelle Strukturen in die Funktionsschicht einbringen. Die können beispielsweise Rillen oder Löcher sein, wie sie nach dem Stand der Technik erst in einem Nachbearbeitungsschritt durch Bohren oder Fräsen etc. erzeugt werden können. Zudem können in weiteren vorteilhaften Ausführungen der Erfindung auch dreidimensionale funktionelle Strukturen erzeugt werden, die mit herkömmlichen Verfahren nicht erzielt werden können, zum Beispiel Kanäle, die über weite Bereiche im Inneren der Funktionsschicht verlaufen. Dies lässt sich beispielsweise dadurch erzielen, dass Bereiche, von nicht ausgehärtetem Beschichtungssubstrat welche später die Kanäle bilden sollen, ganz oder teilweise von einer verfestigten Struktur der darauffolgenden Lage überdeckt werden, und das nicht ausgehärtete Beschichtungssubstrat danach entfernt wird.

In einer Ausführung des Verfahrens geschieht der Prozess des Aushärtens des Beschichtungssubstrats ganz oder teilweise durch Bestrahlen mit Licht, bevorzugt mit Laserlicht. Bei Verwendung eines pulverförmigen Beschichtungssubstrats ist ein ganz besonders vorteilhaftes Verfahren das Lasersintern, speziell das selektive Lasersintern (SLS)
Um die gesamte Breite der Walzenoberfläche auszuhärten, können einer oder mehrere Laser zum Einsatz kommen, und diese gegebenenfalls über die Breite der Walze traversierend angebracht sein.

In einer bevorzugten Ausführung des Verfahrens kann die Steuerung des Aushärtens über ein Computersystem erfolgen. Dadurch kann gesteuert werden, welche Bereiche des Beschichtungssubstrats ausgehärtet werden sollen, und welche nicht. In einer besonders vorteilhaften Ausführung werden die benötigten Steuerungsinformationen ganz oder teilweise aus einem CAD System übernommen.

In einer weiteren bevorzugten Ausführung des Verfahrens beträgt die Dicke der Funktionsschicht am Ende der Herstellung bzw. Bearbeitung mehr als 6mm, bevorzugt mehr als 10 mm, besonders bevorzugt zwischen 10mm und 20mm.

Ein weiterer, unabhängiger Aspekt der Erfindung ist eine Walze geeignet zum Einsatz in einer Maschine zur Herstellung oder Verarbeitung einer Faserstoffbahn, die mittels eines erfindungsgemäßen Verfahrens hergestellt oder bearbeitet wurde

Ein weiter, unabhängiger Aspekt der Erfindung ist die Funktionsschicht einer Walze, geeignet zum Einsatz in einer Maschine zur Herstellung oder Verarbeitung einer Faserstoffbahn hergestellt oder bearbeitet mittels eines erfindungsgemäßen Verfahrens.

Im Folgenden wird die Erfindung ohne Beschränkung der Allgemeinheit anhand der Figuren näher beschrieben. Es zeigen
Figur 1 einen schematischen, nicht maßstäblichen Schnitt einer Walze bei der Bearbeitung mittels eines erfindungsgemäßen Verfahrens.
Figur 2 einen schematischen, nicht maßstäblichen Schnitt einer Walze bei der Bearbeitung mittels eines weiteren, erfindungsgemäßen Verfahrens.
Figur 3 eine Weiterbildung des Gegenstands auf Figur 3.

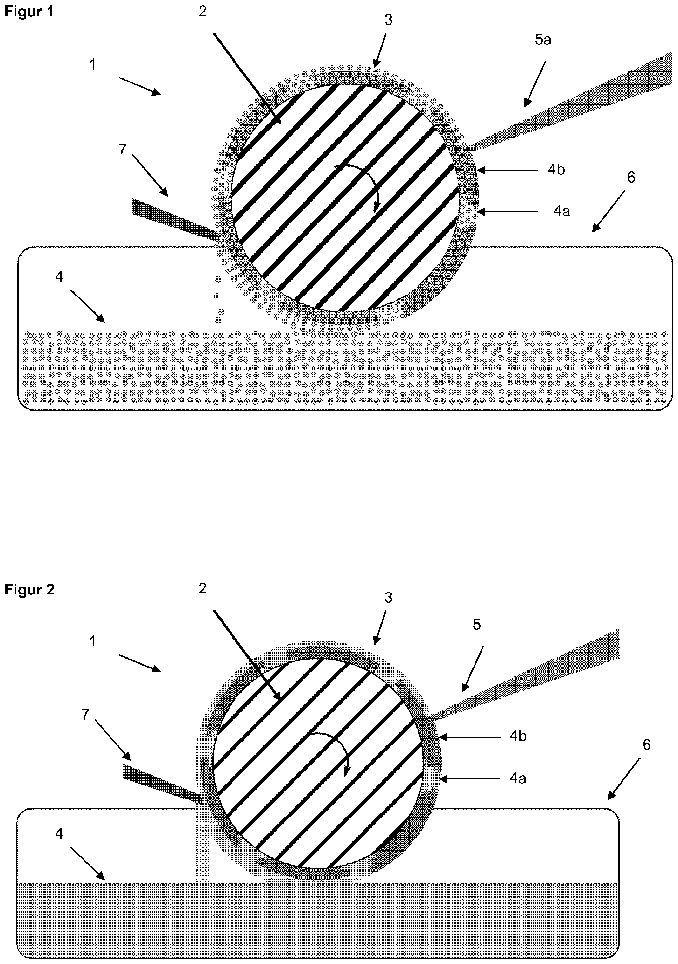

Figur 1 zeigt einen Querschnitt einer Walze 1, wobei der Walzenkern 2 mit einer Funktionsschicht 3 versehen wird. Dabei taucht die Walze 1, die drehbar gelagert ist, mit ihrer gesamten Breite in ein Vorratsvolumen 6 ein, das mit einem Beschichtungssubstrat 4 gefüllt ist. Das Beschichtungssubstrat ist in dem in Figur 1 gezeigten Beispiel ein Pulver, vorzugsweise ein Metallpulver oder ein Kunststoffpulver. Diese Beschichtungssubstrat 4 haftet hier durch elektrostatische Kraft am Walzenrohling. Durch das Eintauchen in das Vorratsvolumen 6 haftet eine weitgehend undefinierte Menge Beschichtungssubstrat 4 am Walzenrohling. Dieses wird in Drehrichtung der Walze 1 vorwärts transportiert. Mittels eines Schabers 7 kann der Überschuss an Beschichtungssubstrat 4 abgeschabert werden, und eine genau definierte Schicht an Beschichtungssubstrat 4 weiter gefördert werden. Der Überschuss an Beschichtungssubstrat 4 kann vorzugsweise wieder in das Vorratsvolumen 6 geführt werden. Diese Schicht wird in Drehrichtung der Walze weiter transportiert, und danach mittels eines Lasers 5a ausgehärtet. Vorzugsweise geschieht das durch den Prozess des Selektiven Lasersinterns. Selektiv bedeutet dabei, dass nicht das gesamte Beschichtungssubstrat 4 gesintert und damit ausgehärtet wird. Vielmehr kann mittels einer Computersteuerung ein nahezu beliebiges Muster von ausgehärtetem Beschichtungssubstrat 4a und nicht ausgehärtetem Beschichtungssubstrat 4b erzeugt werden. Um die gesamte Breite der Walzenoberfläche auszuhärten, können einer oder mehrere Laser zum Einsatz kommen, und diese gegebenenfalls über die Breite der Walze traversierend angebracht sein.
Dieser Prozess des Aufbringens und Aushärtens einer Lage Beschichtungssubstrat 4 kann prinzipiell beliebig oft wiederholt werden, bis die gewünschte Dicke der Funktionsschicht 3 erreicht ist. Bevorzugt ist die fertige Funktionsschicht 3 dicker als 6 mm, besonders bevorzugt dicker als 10 mm, ganz besonders bevorzugt zwischen 10 mm und 20 mm dick. Bei dem lagenweisen Aufbringen und Aushärten des Beschichtungssubstrats 4 können Bereiche von nicht ausgehärtetem Beschichtungssubstrat 4a ganz oder teilweise von Bereichen von ausgehärtetem Beschichtungssubstrat 4b der folgenden Lage ganz oder teilweise bedeckt werden. Das nicht ausgehärtete Beschichtungssubstrat 4a, also hier das Pulver, wird in einem weiteren Verfahrensschritt aus der Funktionsschicht 3 entfernt. Dadurch entstehen Hohlräume in der Funktionsschicht. Bei Anzahl und Formgebung dieser Hohlräume ist man in dem erfindungsgemäßen Verfahren nahezu vollkommen frei. Auch komplizierte Muster, und beispielsweise Kanäle, die weitgehend im Inneren der Funktionsschicht 3 verlaufen können so realisiert werden. Die Daten zur Beschreibung der dreidimensionalen funktionellen Struktur der Hohlräume können in das Computersystem der Steuerung eingelesen werden, beispielsweise aus einem CAD System.

Auch Figur 2 zeigt einen Querschnitt einer Walze 1, wobei der Walzenkern 2 mit einer Funktionsschicht 3 versehen wird. Auch hier wird die drehbar gelagerte Walze 1 über ihre gesamte Breite in ein Vorratsvolumen 6 getaucht, das mit Beschichtungssubstrat 4 gefüllt ist. In dem in Figur 2 gezeigten Verfahren besteht das Beschichtungssubstrat 4 aus einer Flüssigkeit, bevorzugt aus einem flüssigen Kunststoff. Es ist vorstellbar, dass es sich bei dem Kunststoff um ein Polyurethan handelt, oder um Gummi oder ein anderes Polymer. Das Verfahren läuft ansonsten prinzipiell genauso ab, wie bereits zu Figur 1 beschrieben Ein Schaber 7 schabert die überschüssige Flüssigkeit des Beschichtungssubstrats 4 ab, welches vorzugsweise wieder in das Vorratsvolumen 6 geführt wird. Die Aushärtung des Schichtungssubstrats erfolgt wieder durch Bestrahlung, beispielsweise mit einem Laser 5. Auch bei dieser Ausführung des Verfahrens können wieder mehrere übereinander aufgebrachte Lagen aus Beschichtungssubstrat 4 eine Funktionsschicht 3 ergeben. Auch in dieser Ausführung des erfindungsgemäßen Verfahrens wird wieder das nicht ausgehärtete flüssige Beschichtungssubstrat 4a entfernt, wodurch Hohlräume in der Funktionsschicht 3 entstehen. Weiterhin gilt natürlich bzgl. der dreidimensionalen Struktur der Hohlräume auch das zu Figur 1 Gesagte.

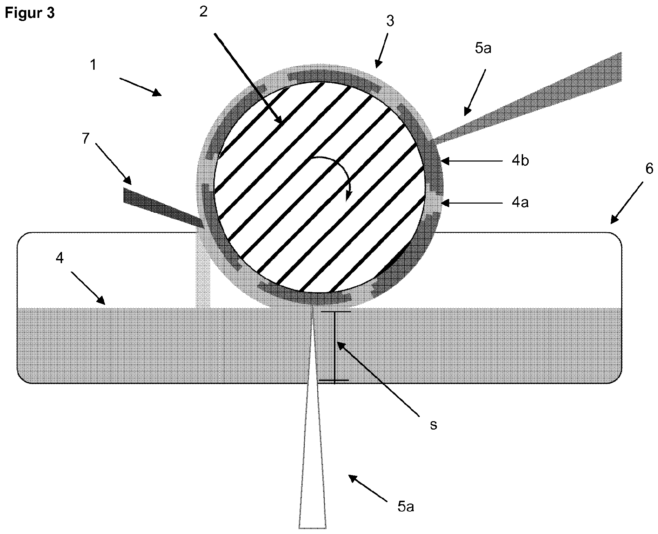

Figur 3 zeigt eine Weiterbildung des Gegenstands von Figur 2, sodass das bereits zu Figur 2 Gesagte gilt. Die Darstellung ist hier rein schematisch und daher unmaßstäblich. Wie in Figur 2 dargestellt, weist das Vorratsvolumen 6 einen Boden und mit dem Boden verbundene Wände zur Aufnahme des Beschichtungssubstrats 4 auf. Ferner kann die in den Figuren dargestellte Pegelhöhe des Beschichtungssubstrats 4 bezogen auf den Boden des Vorratsvolumens 6 auch größer gewählt sein, sodass die Walze 1 tiefer als gezeigt in dieses eintaucht.

Vorliegend ist die Vorrichtung zum Aushärten des Beschichtungssubstrats 4 derart angeordnet, dass die Bestrahlung, z.B. mittels Laser, zusätzlich oder alternativ zu der Anordnung in Figur 2 durch das flüssige Beschichtungssubstrats 4 hindurch erfolgt. D.h. der Strahlengang verläuft durch das Beschichtungssubstrat 4 hindurch. Entsprechend kann das Beschichtungssubstrat 4 derart ausgebildet sein, dass es eine solche zumindest teilweise Transmission durch selbiges hindurch zulässt. Die dargestellte Vorrichtung zum Aushärten des Beschichtungssubstrats 4, wie die Laserstrahlquelle kann außerhalb, unterhalb oder innerhalb des Vorratsvolumens 6 angeordnet sein. Werden zwei Laserstrahlen vorgesehen, so können diese von ein- und derselben Vorrichtung erzeugt werden.

Weiterhin kann der Abstand s zwischen dem Boden des Vorratsvolumens 6 und der radial äußersten Oberfläche der Walze 1 derart gewählt sein, dass er im Wesentlichen der Dicke einer aufzubringenden Lage an Beschichtungssubstrat 4 - in Radialrichtung der Walze 1 gesehen - entspricht. Im Wesentlichen bedeutet hier, dass auch mehr als genau diese Dicke als Abstand s möglich ist. Der Abstand s kann auch stetig einstellbar, insbesondere kontinuierlich nachführbar sein und bevorzugt während des Herstellungsverfahrens der Walze 1 konstant gehalten werden. Dazu kann die Walze 1 relativ zum Vorratsvolumen entlang der dargestellten Zeichenebene verschiebbar, insbesondere (abgesehen von deren Drehbewegung um die eigene Achse) nur translatorisch verschiebbar sein. Der Abstand s kann auch der kleinste Abstand zwischen den genannten Elementen sein und verläuft bevorzugt parallel oder entlang einer Lotrechten auf den Boden des Vorratsvolumens 6.

Der durch das Beschichtungssubstrat 4 hindurchstrahlende Laserstrahl kann auch so fokussiert sein, dass er im Bereich des Abstands s, also im Bereich der Dicke der herzustellenden Lage, im Beschichtungssubstrat 4 auftrifft.

## Patentansprüche

1. Verfahren zur Herstellung oder Bearbeitung einer Walze (1), geeignet zum Einsatz in einer Maschine zur Herstellung oder Verarbeitung einer Faserstoffbahn, wobei die Walze einen Walzenkern (2) und zumindest eine Funktionsschicht (3) umfasst, wobei das Verfahren das Aufbringen zumindest einer Funktionsschicht umfasst wobei dieses Aufbringen zumindest die folgenden Prozessschritte aufweist:
a) Aufbringen eines Beschichtungssubstrats (4) auf die Oberfläche des Walzenrohlings, wobei das Aufbringen über mindestens die halbe Walzenbreite, bevorzugt über 75% der Walzenbreite, besonders bevorzugt über die gesamte Walzenbreite gleichzeitig erfolgt, **gekennzeichnet durch** den folgenden Schritt:
b) Aushärten von Teilen des gesamten aufgebrachten Beschichtungssubstrats (4) unter Bildung einer verfestigten Struktur, wobei das Aushärten des Beschichtungssubstrats (4) ganz oder teilweise durch Bestrahlung mit Licht, bevorzugt Laserlicht (5), besonders bevorzugt durch Lasersintern (5a) erfolgt.

2. Verfahren nach Anspruch 1, **dadurch gekennzeichnet, dass** das Beschichtungssubstrat ein Pulver oder eine Flüssigkeit umfasst.

3. Verfahren nach einem der vorherigen Ansprüche, **dadurch gekennzeichnet, dass** das Beschichtungssubstrat Kunststoff und/oder Metall umfasst.

4. Verfahren nach einem der vorherigen Ansprüche, **dadurch gekennzeichnet, dass** das Aufbringen des Beschichtungssubstrats (4) durch Eintauchen des Walzenrohlings in ein Vorratsvolumen (6) erfolgt, welches mit Beschichtungssubstrat (4) gefüllt wird, wobei der Walzenrohling vorzugsweise drehbar gelagert ist.

5. Verfahren nach einem der vorherigen Ansprüche, **dadurch gekennzeichnet, dass** das Beschichtungssubstrat (4) durch elektrostatische Anziehung am Walzenrohling haftet.

6. Verfahren nach einem der vorherigen Ansprüche, **dadurch gekennzeichnet, dass** das Beschichtungssubstrat (4) in einer oder mehreren Lagen übereinander aufgetragen wird, wobei der Auftrag einer folgenden Lage von Beschichtungssubstrat (4) auf der ganz oder teilweise verfestigten Struktur der vorherigen Lage erfolgt.

7. Verfahren nach einem der vorherigen Ansprüche, **dadurch gekennzeichnet, dass** die Dicke der aufgebrachten Lage von Beschichtungssubstrat (4) mittels eines Schabers (7) eingestellt werden kann, welcher in Drehrichtung der Walze (1) gesehen nach dem Aufbringen des Beschichtungssubstrats (4) auf die Walze (1) aber vor der Vorrichtung (5, 5a) zum Aushärten des Beschichtungssubstrats (4) angeordnet ist.

8. Verfahren nach einem der vorherigen Ansprüche, **dadurch gekennzeichnet, dass** die Bereiche von nicht ausgehärtetem Beschichtungssubstrat (4a) ganz oder teilweise von Bereiche von ausgehärtetem Beschichtungssubstrat (4b) der folgenden Lage überdeckt werden.

9. Verfahren nach einem der vorherigen Ansprüche, **dadurch gekennzeichnet, dass** das Verfahren einen Prozessschritt aufweist, in dem Beschichtungssubstrat (4b) welches in Prozessschritt b) nicht ausgehärtet wurde, wieder entfernt wird.

10. Verfahren nach einem der vorherigen Ansprüche, **dadurch gekennzeichnet, dass** die Bereiche von ausgehärtetem Beschichtungssubstrat (4a) nach dem Entfernen des nicht ausgehärteten Beschichtungssubstrats (4a) die verfestigten Strukturen in Form von dreidimensionalen funktionellen Strukturen insbesondere Rillen oder Kanäle bilden.

11. Verfahren nach einem der vorherigen Ansprüche, **dadurch gekennzeichnet, dass** die Steuerung des Aushärtens über ein Computersystem, bevorzugt auf Grundlage von Daten aus einem CAD System gesteuert wird.

12. Verfahren nach einem der vorherigen Ansprüche, **dadurch gekennzeichnet, dass** die Funktionsschicht eine Dicke von mehr als 6mm, bevorzugt mehr als 10 mm, besonders bevorzugt zwischen 10mm und 20mm besitzt.

13. Verfahren zur Herstellung oder Bearbeitung einer Walze (1), nach einem der vorherigen Ansprüche, **wobei** das Verfahren das Aufbringen zumindest einer Funktionsschicht umfasst, wobei dieses Aufbringen zumindest die folgenden Prozessschritte aufweist:
a) Aufbringen einer Lage eines Beschichtungssubstrats (4) auf die Oberfläche des Walzenkerns (2), **gekennzeichnet durch** die folgenden Schritte:
b) Aushärten von Teilen des aufgebrachten Beschichtungssubstrats (4) unter Bildung einer verfestigten, vorgegebenen Struktur,
c) Wiederholen der Schritte a) und b), sodass mehrere Lagen übereinander aufgetragen werden, wobei der Auftrag einer folgenden Lage von Beschichtungssubstrat (4) auf der verfestigten, vorgegebenen Struktur der vorherigen Lage erfolgt, bis die zumindest eine Funktionsschicht (3) fertiggestellt ist, wobei das Aushärten des Beschichtungssubstrats (4) ganz oder teilweise durch Bestrahlung mit Licht, bevorzugt Laserlicht (5), besonders bevorzugt durch Lasersintern (5a) erfolgt.

## Claims

1. A method of manufacturing or processing a roll (1) suitable for use in a machine for manufacturing or processing a fibrous web, said roll comprising a roll core (2) and at least one functional layer (3), the method comprising the application of at least one functional layer, said application comprising at least the following process steps:
a) Application of a coating substrate (4) to the surface of the roll blank, the application taking place over at least half the roll width, preferably over 75% of the roll width, particularly preferably over the entire roll width simultaneously, **characterised by** the following step:
b) Curing of parts of the entire applied coating substrate (4) with the formation of a solidified structure, wherein the curing of the coating substrate (4) takes place wholly or partially by irradiation with light, preferably laser light (5), particularly preferably by laser sintering (5a).

2. The method according to claim 1, **characterized in that** the coating substrate comprises a powder or a liquid.

3. A method according to any one of the preceding claims, **characterised in that** the coating substrate comprises plastic and/or metal.

4. Method according to one of the previous claims, **characterised in that the** coating substrate (4) is applied by dipping the roller blank into a supply volume (6) which is filled with coating substrate (4), the roller blank preferably being rotatably mounted.

5. Method according to one of the previous claims, **characterised in that** the coating substrate (4) adheres to the roller blank by electrostatic attraction.

6. A method according to any one of the preceding claims, **characterised in that** the coating substrate (4) is applied in one or more layers on top of each other, the application of a subsequent layer of coating substrate (4) being carried out on the fully or partially solidified structure of the previous layer.

7. Method according to one of the previous claims, **characterised in that** the thickness of the applied layer of coating substrate (4) can be adjusted by means of a scraper (7) which, viewed in the direction of rotation of the roller (1), is arranged after the coating substrate (4) has been applied to the roller (1) but before the device (5, 5a) for curing the coating substrate (4).

8. A method according to any one of the preceding claims, **characterised in that the** areas of uncured coating substrate (4a) are wholly or partially covered by areas of cured coating substrate (4b) of the following layer.

9. A method according to any one of the preceding claims, **characterised in that the** method comprises a process step in which coating substrate (4b) which was not cured in process step b) is removed again.

10. Method according to any one of the preceding claims, **characterized in that** the areas of cured coating substrate (4a) form the solidified structures in the form of three-dimensional functional structures, in particular grooves or channels, after removal of the uncured coating substrate (4a).

11. A method according to any one of the preceding claims, **characterized in that** the control of the curing is controlled via a computer system, preferably based on data from a CAD system.

12. Method according to one of the previous claims, **characterised in that** the functional layer has a thickness of more than 6 mm, preferably more than 10 mm, particularly preferably between 10 mm and 20 mm.

13. A method of manufacturing or processing a roller (1), according to any one of the preceding claims, **said** method comprising applying at least one functional layer, said applying comprising at least the following process steps:
a) Applying a layer of a coating substrate (4) to the surface of the roll core (2), **characterised by** the following steps:
b) Curing of parts of the applied coating substrate (4) to form a solidified, predetermined structure,
c) repeating steps a) and b) so that several layers are applied one on top of the other, wherein the application of a subsequent layer of coating substrate (4) takes place on the solidified, predetermined structure of the previous layer until the at least one functional layer (3) is completed, wherein the curing of the coating substrate (4) takes place wholly or partly by irradiation with light, preferably laser light (5), particularly preferably by laser sintering (5a).

## Revendications

1. Procédé de fabrication ou de traitement d'un rouleau (1) adapté à une utilisation dans une machine de fabrication ou de traitement d'une bande fibreuse, ledit rouleau comprenant un noyau de rouleau (2) et au moins une couche fonctionnelle (3), le procédé comprenant l'application d'au moins une couche fonctionnelle, ladite application comprenant au moins les étapes suivantes du processus :
a) Application d'un substrat de revêtement (4) sur la surface de l'ébauche de rouleau, l'application ayant lieu sur au moins la moitié de la largeur du rouleau, de préférence sur 75 % de la largeur du rouleau, particulièrement préférablement sur toute la largeur du rouleau simultanément, **caractérisée par** l'étape suivante :
b) Durcissement de parties de l'ensemble du substrat de revêtement appliqué (4) avec la formation d'une structure solidifiée, dans lequel le durcissement du substrat de revêtement (4) a lieu entièrement ou partiellement par irradiation avec de la lumière, de préférence de la lumière laser (5), particulièrement préférablement par frittage laser (5a).

2. Procédé selon la revendication 1, **caractérisé en ce que** le substrat de revêtement comprend une poudre ou un liquide.

3. Procédé selon l'une quelconque des revendications précédentes, **caractérisé en ce que** le substrat de revêtement comprend du plastique et/ou du métal.

4. Procédé selon l'une des revendications précédentes, **caractérisé en ce que le** substrat de revêtement (4) est appliqué par immersion de l'ébauche de rouleau dans un volume d'alimentation (6) qui est rempli de substrat de revêtement (4), l'ébauche de rouleau étant de préférence montée de manière rotative.

5. Procédé selon l'une des revendications précédentes, **caractérisé en ce que** le substrat de revêtement (4) adhère à l'ébauche de rouleau par attraction électrostatique.

6. Procédé selon l'une quelconque des revendications précédentes, **caractérisé en ce que** le substrat de revêtement (4) est appliqué en une ou plusieurs couches les unes sur les autres, l'application d'une couche suivante de substrat de revêtement (4) étant effectuée sur la structure entièrement ou partiellement solidifiée de la couche précédente.

7. Procédé selon l'une des revendications précédentes, **caractérisé en ce que** l'épaisseur de la couche appliquée de substrat de revêtement (4) peut être réglée au moyen d'un racloir (7) qui, vu dans le sens de rotation du rouleau (1), est disposé après l'application du substrat de revêtement (4) sur le rouleau (1) mais avant le dispositif (5, 5a) de durcissement du substrat de revêtement (4).

8. Procédé selon l'une quelconque des revendications précédentes, **caractérisé en ce que les** zones de substrat de revêtement non durci (4a) sont entièrement ou partiellement recouvertes par des zones de substrat de revêtement durci (4b) de la couche suivante.

9. Procédé selon l'une quelconque des revendications précédentes, **caractérisé en ce que le** procédé comprend une étape de traitement dans laquelle le substrat de revêtement (4b) qui n'a pas été durci dans l'étape de traitement b) est à nouveau retiré.

10. Procédé selon l'une quelconque des revendications précédentes, **caractérisé en ce que** les zones du substrat de revêtement durci (4a) forment les structures solidifiées sous forme de structures fonctionnelles tridimensionnelles, en particulier des rainures ou des canaux, après l'élimination du substrat de revêtement non durci (4a).

11. Procédé selon l'une quelconque des revendications précédentes, **caractérisé en ce que** la commande du durcissement est commandée par un système informatique, de préférence sur la base de données provenant d'un système de CAO.

12. Procédé selon l'une des revendications précédentes, **caractérisé en ce que** la couche fonctionnelle a une épaisseur supérieure à 6 mm, de préférence supérieure à 10 mm, notamment comprise entre 10 mm et 20 mm.

13. Procédé de fabrication ou de traitement d'un rouleau (1), selon l'une quelconque des revendications précédentes, **ledit** procédé comprenant l'application d'au moins une couche fonctionnelle, ladite application comprenant au moins les étapes de procédé suivantes :
a) Application d'une couche d'un substrat de revêtement (4) sur la surface du noyau de rouleau (2), **caractérisée par** les étapes suivantes :
b) Durcissement de parties du substrat de revêtement appliqué (4) pour former une structure prédéterminée solidifiée,
c) répéter les étapes a) et b) de sorte que plusieurs couches soient appliquées l'une sur l'autre, dans lequel l'application d'une couche suivante de substrat de revêtement (4) a lieu sur la structure prédéterminée solidifiée de la couche précédente jusqu'à ce que la au moins une couche fonctionnelle (3) soit achevée, dans lequel le durcissement du substrat de revêtement (4) a lieu entièrement ou partiellement par irradiation avec de la lumière, de préférence de la lumière laser (5), particulièrement préférablement par frittage laser (5a).
